# EUROPEAN PATENT APPLICATION

(11) **EP 3 525 199 A1**
(43) Date of publication of application: **14.08.2019**
(21) Application number: 18215930.1
(22) Date of filing: 31.12.2018
(51) Int. Cl.: G09G 3/20, G09G 5/14

(54) **COMMUNICATION APPARATUS AND CONTROL PROGRAM THEREOF**

(30) Priority: 07.02.2018 JP 2018020119
(71) Applicant: TOYOTA JIDOSHA KABUSHIKI KAISHA, Toyota-shi, Aichi-ken, 471-8571 (JP)
(72) Inventor: KAKU, Wataru, Toyota-shi, Aichi-ken,, 471-8571 (JP); YOSHIZAWA, Shintaro, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

Provided is a communication apparatus in which, when the moving image data composed of a plurality of frame images for expressing an emotion is switched from first moving image data to second moving image data to be reproduced and displayed on a display unit, a display control unit selects a frame image to start reproducing from the second moving image data in order to reproduce and display the second moving image data in such a way that a next frame image of a frame image of the first moving image data reproduced and displayed immediately before the switching becomes similar to the frame image of the second moving image data to be reproduced and displayed immediately after the switching.

## Description

### BACKGROUND

The present disclosure relates to a communication apparatus and a control program thereof.

A communication robot that expresses emotions by animation on a display unit according to, for example, information from the outside is known (see, for example, Japanese Unexamined Patent Application Publication No. 2016-193466).

### SUMMARY

An animation moving image expressing expressions usually describes changes of the expressions in one cycle by a plurality of consecutive frame images. Therefore, when the communication robot continuously expresses a certain expression, it repeatedly reproduces the animation moving image corresponding to the expression. To change the expression to be expressed, the communication robot switches the animation moving image to an animation moving image corresponding to the next expression and reproduces it. At this time, the communication robot according to the related art terminates the moving image being reproduced midway through the reproduction and starts reproducing the next moving image, or the communication robot according to the related art starts reproducing the next moving image after completing the reproduction of one cycle of the moving image being reproduced. When the moving image being reproduced midway through the reproduction is terminated, and then the next moving image is reproduced from the beginning, the continuity of expressions is lost, causing an unnatural and non-continuous change in the expressions which is impossible in living human beings and animals. When one cycle of the moving image being reproduced is completed, and then reproduction of the next moving image is started, for example, a delay in a turning point in the emotions is generated in a conversation with a user, which become a factor in hindering smooth communication.

The present disclosure provides a communication apparatus that switches emotions to be expressed at an appropriate timing and thus reduces an unnatural impression given to the user in consideration of the continuity of expressions at the time of switching.

A communication apparatus according to a first exemplary aspect of the present disclosure includes: a display unit; an acquisition unit configured to acquire, from a database, moving image data composed of a plurality of frame images for expressing an emotion; a display control unit configured to reproduce and display the moving image data acquired by the acquisition unit on the display unit; and a determination unit configured to determine switching of the moving image data reproduced and displayed on the display unit from first moving image data, which is currently being reproduced and displayed, to second moving image data, which is to be reproduced and displayed next. When the determination unit determines to switch the moving image data to be reproduced and displayed on the display unit from the first moving image data to the second moving image data, the display control unit selects a frame image to start reproducing from the second moving image data in order to reproduce and display the second moving image data in such a way that a next frame image of a frame image of the first moving image data reproduced and displayed immediately before the switching becomes similar to the frame image of the second moving image data to be reproduced and displayed immediately after the switching.

When such display control is performed, the continuity of the reproduced images at the time of switching can be ensured, because a flow of a change in the expressions while reproducing and displaying the first moving image data can be taken over to start reproducing and displaying the second moving image data. Further, since the reproduction of the second moving image data is started without waiting for reproduction of one cycle of the first moving image data to be completed, it is possible to switch the expression at the timing when the expression should be switched.

In the above communication apparatus, the display unit may be provided to display the moving image data expressing a change in an eyeball part, and the display control unit may select the frame image to start reproducing from the second moving image data in order to reproduce and display the second moving image data in such a way that an opening and closing degree of a black eye of the eyeball part of the next frame image of the frame image of the first moving image data reproduced and displayed immediately before the switching becomes similar to that of the frame image of the second moving image data to be reproduced and displayed immediately after the switching. The opening and closing degree of the black eye greatly contributes to the impression of an expression, and when the opening and closing degree of the black eye is discontinuous at the time of switching, a strong unnatural impression is given to the user. Thus, when the frame image at the time of switching is selected based on the opening and closing degree of the black eye, a smooth impression can be given to the user in a transition of the expressions.

In such a communication apparatus, the moving image data may include information about the opening and closing degree of each frame image as additional information, and the display control unit may select the frame image to start reproducing from the second moving image data with reference to the additional information. When such information is prepared in advance, an appropriate frame image can be selected without performing an image analysis or the like of the frame image, so that reproduction and display of the second moving image data can be started early with less computation.

Further, the moving image data includes cycle information about a cycle from an open state of the black eye, then to a closed state of the black eye, and then again to the open state of the black eye as the additional information, and the display control unit selects the frame image to start reproducing from the second moving image data with reference to the additional information. When the moving image data includes the cycle information, appropriate frame image data can be selected from the second moving image data according to whether the state of the black eye is changing from the open state to the close state or from the close state to the open state. That is, not only the frame images before and after a joint between the frame images are similar but also the flow of the moving image reproduced over the joint can be made smooth.

In the moving image data, each frame image may include a plurality of layers, and the plurality of layers may include a black eye layer expressing the black eye, and the display control unit may adjust a display position of the black eye layer on the display unit according to a line-of-sight direction to be expressed and fix the positions where the layers other than the black eye layer are displayed. Such a layer structure of the frame image enables an expression to be stably expressed and the line-of-sight direction to be adjusted by a simple calculation. The user can feel the reality of communication by meeting the robot's eyes.

A control program according to a second exemplary aspect is a control program of a communication apparatus for reproducing and displaying moving image data composed of a plurality of frame images for expressing an emotion on a display unit. The control program causing a computer to execute: reproducing and displaying first moving image data of the moving image data on the display unit; determining switching of the moving image data to be reproduced and displayed on the display unit from the first moving image data to second moving image data; and selecting a frame image to start reproducing from the second moving image data in order to reproduce and display the second moving image data when the determining determines that the moving image data is switched to the second moving image data, in such a way that a next frame image of a frame image of the first moving image data reproduced and displayed immediately before the switching becomes similar to the frame image of the second moving image data to be reproduced and displayed immediately after the switching.

When such processing is sequentially performed, the continuity of the reproduced images at the time of switching can be ensured, because a flow of a change in the expressions while reproducing and displaying the first moving image data can be taken over to start reproducing and displaying the second moving image data. Further, since the reproduction of the second moving image data is started without waiting for reproduction of one cycle of the first moving image data to be completed, it is possible to switch the expression at the timing when the expression should be switched.

According to the present disclosure, it is possible to provide a communication apparatus that switches emotions to be expressed at an appropriate timing and thus reduces an unnatural impression given to the user in consideration of the continuity of expressions at the time of switching.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic view of a robot according to a first embodiment;
Fig. 2 is a system configuration diagram of the robot;
Fig. 3 is a perspective view showing a structure of a right eye;
Fig. 4 is a view showing a relationship between expressions of the robot and the Russell's circumplex model;
Fig. 5 is a view for describing reproduction of moving image data;
Fig. 6 is a view for describing header information of the moving image data;
Fig. 7 is a view for describing switching of reproduction from first moving image data to second moving image data;
Fig. 8 is a view for describing switching of reproduction from the first moving image data to the second moving image data;
Fig. 9 is a view for describing switching of reproduction from the first moving image data to the second moving image data;
Fig. 10 is a view for describing a layer structure of a frame image;
Fig. 11 is a flowchart showing a procedure of operation processing;
Fig. 12 is a schematic view of a transport robot according to a second embodiment; and
Fig. 13 is a schematic view of a tablet terminal according to a third embodiment.

### DESCRIPTION OF EMBODIMENTS

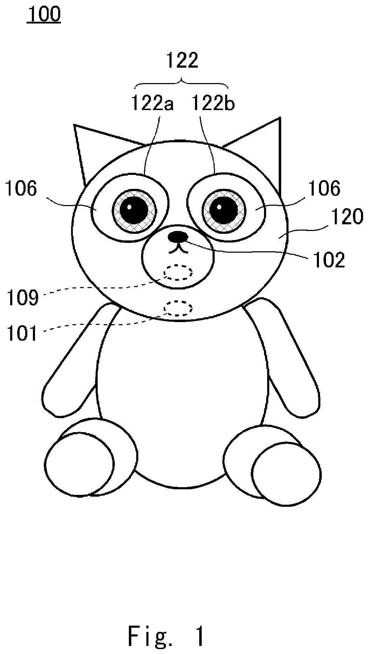

Fig. 1 is a schematic view of a robot 100 according to a first embodiment of the present disclosure. The robot 100 is a robot as a communication apparatus that conducts a voice dialogue with a human being who is a user. The robot 100 is a character apparatus that embodies a character. An expression of the robot 100's eyes changes in accordance with the dialogue.

An appearance of the robot 100 imitates an animal, and includes a face part 120. In the face part 120, an eyeball part 122 (a right eye 122a and a left eye 122b) are provided at a position that the user can recognize it as eyes. The structure of the eyeball part 122 will be described in detail later. Display panels 106, which are, for example, liquid crystal panels or organic EL panels, are installed behind the right eye 122a and the left eye 122b.

A camera 102 is disposed inconspicuously at a position of a nose of the robot 100. The camera 102 includes, for example, a CMOS sensor, and functions as an imaging unit that captures an image for recognizing an external environment. A speaker 109 is disposed in a hidden manner at a position of a mouth of the robot 100. The speaker 109 functions as an utterance output unit that outputs sounds generated by the robot 100. The user feels as if the robot 100 is talking by the sounds output from the position of the mouth. A microphone 101 is disposed in a hidden manner at any position of the face part 120. The microphone 101 has a function of collecting user's uttered voices and the like.

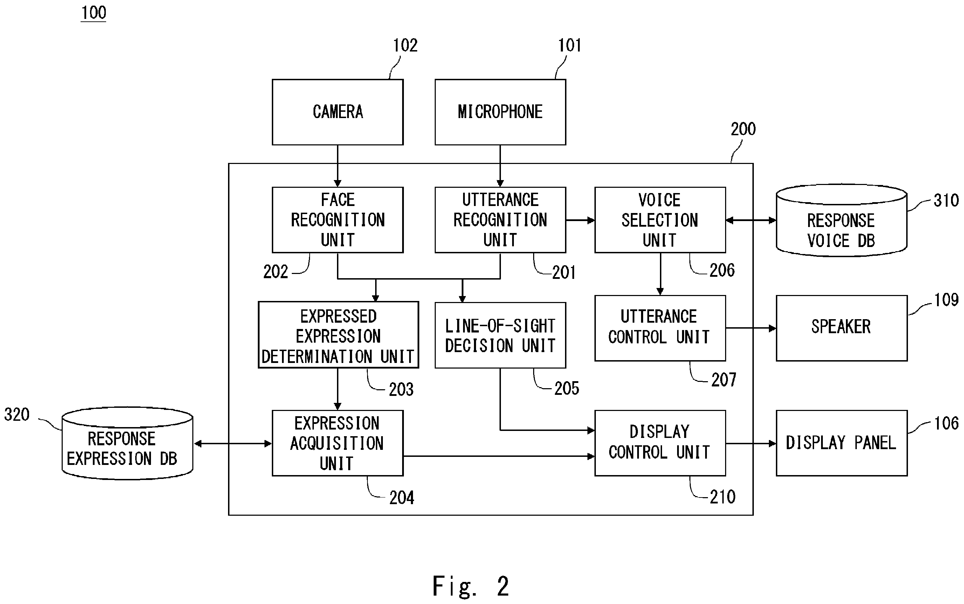

Fig. 2 is a system configuration diagram of the robot 100. Main system components of the robot 100 include the microphone 101, the camera 102, the display panels 106, the speaker 109, a control unit 200, a response voice DB 310, and a response expression DB 320. The control unit 200 is composed of, for example, a CPU and also functions as a function execution unit that executes each function. The control unit 200 mainly functions an utterance recognition unit 201, a face recognition unit 202, an expressed expression determination unit 203, an expression acquisition unit 204, a line-of-sight decision unit 205, a voice selection unit 206, an utterance control unit 207, and a display control unit 210.

A main function of the microphone 101 is to collect uttered voices of the user who is a partner of the robot 100 having a dialogue with. The microphone 101 converts the uttered voice of the user, which has been collected, into a voice signal and passes it over to the utterance recognition unit 201.

The utterance recognition unit 201 analyzes the voice signal received from the microphone 101 and recognizes an utterance of the user. The utterance recognition unit 201 and the microphone 101 cooperate with each other to function as an utterance acquisition unit that acquires a user's utterance to talk with the robot 100. Specifically, the utterance recognition unit 201 recognizes the user's uttered content by a common voice recognition technique. The utterance recognition unit 201 passes the recognized uttered content over to the voice selection unit 206.

The voice selection unit 206 selects a sentence suitable as a conversation for the user's uttered content recognized by the utterance recognition unit 201, collects utterance data corresponding to the selected sentence from the response voice DB 310, and passes the utterance data over to the utterance control unit 207. The response speech DB 310 is a database of response voices connected to the voice selection unit 206, and is composed of, for example, a recording medium of a hard disc drive. The response voice DB 310 is organized, for example, as a corpus. Each term in the response voice DB 310 is stored with reproducible utterance data.

The utterance control unit 207 converts the received utterance data into a voice signal and pass it over to the speaker 109. The voice selection unit 206 and the utterance control unit 207 cooperate with each other to function as a voice generation unit that generates a response voice based on the user's uttered content. The speaker 109 receives the voice signal converted by the utterance control unit 207 and outputs the response voice as a sound.

The utterance recognition unit 201 analyzes the prosody of the received voice signal. When the utterance is captured as a sound wave, the prosody represents the physical characteristics of the sound wave. The utterance recognition unit 201 calculates, for example, a center frequency, a frequency band, and a maximum value and an average value of an amplitude in a group of sound waves uttered by the user as the physical characteristics. The utterance recognition unit 201 passes the analyzed prosody over to the expressed expression determination unit 203. In addition, the utterance recognition unit 201 analyzes a source direction of the voice from the received voice signal, and passes the analyzed source direction over to the line-of-sight decision unit 205.

A main function of the camera 102 is to photograph the user who communicates with the robot 100. The camera 102 converts the photographed image into an image signal and passes the image signal over to the face recognition unit 202.

The face recognition unit 202 analyzes the image signal received from the camera 102 and recognizes the user's face who the robot 100 communicates with. The face recognition unit 202 passes the image signal of the recognized face area over to the expressed expression determination unit 203. In addition, the face recognition unit 202 passes a representative coordinate value of the face area over to the line-of-sight decision unit 205. The representative coordinate value is, for example, a middle coordinate between the eyes of the recognized face.

The expressed expression determination unit 203 estimates the user's emotion using the image signal of the face area received from the face recognition unit 202 and the prosody received from the utterance recognition unit 201. Specifically, the expressed expression determination unit 203 extracts feature points from the user's face image by a common face recognition technique, and calculates an expression feature amount such as positions of the feature points, an inclination of a line segment connecting adjacent feature points, and the number of feature points. Then, for example, a size of a pupil, a turn-down degree of the eye, a degree of how much a corner of the mouth is lifted, whether the user is sweating, the degree of wrinkling are extracted from the expression feature amount and used as materials to estimate the user's emotion. Further, the expressed expression determination unit 203 extracts, for example, a change in the amplitude degree and an intonation at the end of the sentence from the prosody, and uses them as the materials for estimating the user's emotion. The expressed expression determination unit 203 comprehensively evaluates these materials and estimates the user's emotion.

The expressed expression determination unit 203 determines an empathic emotion to be expressed by the robot 100 corresponding to the estimated user's emotion. The expressed expression determination unit 203 passes the determined empathic emotion over to the expression acquisition unit 204. The expression acquisition unit 204 acquires moving image data corresponding to the received empathic emotion from the response expression DB 320 for display on the display panels 106.

The response expression DB 320 is a database of response expressions connected to the expression acquisition unit 204, and is composed of, for example, a recording medium of a hard disk drive. The response expression DB 320 is organized in accordance with, for example, the Russell's circumplex model. The response expression DB 320 stores the moving image data of a specific eye expression in association with the emotion meant by the expression. The moving image data is composed of a plurality of frame images representing a change in the eyeball part, and the emotion is expressed by drawing these frame images and by a change in the drawings. The expression acquisition unit 204 has a function as an acquisition unit that acquires such moving image data from the response expression DB which is a database. The expression acquisition unit 204 passes the acquired moving image data over to the display control unit 210.

The line-of-sight decision unit 205 calculates a direction of the user who the robot 100 communicates with using at least one of the source direction of the voice received from the utterance recognition unit 201 and the representative coordinate value of the face area received from the face recognition unit 202. Then, the line-of-sight decision unit 205 decides that this direction is a line-of-sight direction in which the robot 100 should face. The line-of-sight decision unit 205 passes the target line-of-sight direction over to the display control unit 210.

The display control unit 210 expands the moving image data received from the expression acquisition unit 204, adjusts a display position of black eyes to achieve the line-of-sight direction received from the line-of-sight decision unit 205, and reproduces and displays the eyes on the display panels 106. When the display control unit 210 receives new moving image data from the expression acquisition unit 204, it starts to reproduce and display new moving image data. The details will be described later.

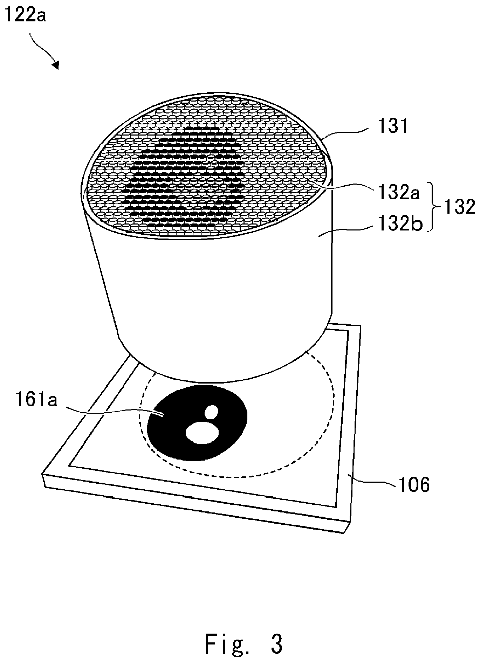

Fig. 3 is a perspective view showing the structure of the right eye 122a. The left eye 122b has the same structure as that of the right eye 122a. The display control unit 210 controls display of each of the display panels 106.

The right eye 122a is mainly composed of a translucent cover 131, an optical fiber bundle 132, and the display panel 106. The translucent cover 131 is molded from, for example, transparent polycarbonate, and plays a role as an exterior material of the face part 120. It is natural for surfaces of eyes of a robot imitating an animal or a human being to be curved, which is easily accepted by the user. Therefore, in the robot 100 according to this embodiment, the translucent cover 131 corresponding to the surface of the eye is formed into a convex curved surface toward the outside.

The display panel 106 for displaying a right eye image 161a, which is a designed symbol of a black eye and the like of the right eye, is installed on the rear side of the right eye 122a. Further, the display surface has a size that accommodates an outer periphery of the translucent cover 131. In the drawing, the right eye image 161a is displayed at a position deviated from a white eye of a size corresponding to the outer periphery of the translucent cover 131.

Although the black eye displayed in this embodiment is a part corresponding to, if the robot is a living human being, a cornea including an iris and a pupil. However, as the black eye displayed in this embodiment is designed and displayed, eyes of a living human being may be partially omitted or exaggerated. The black eye may be decorated in such a way not possible in a living human being. In any case, the black eye displayed in this embodiment may be a symbol that enables the user who the robot 100 communicates with to recognize it as an eye expression.

An inner curved surface of the translucent cover 131 and the surface of the display panel 106 are connected by the optical fiber bundle 132. The optical fiber bundle 132 transmits the right eye image 161a displayed on the display panel 106 to the translucent cover 131. The optical fiber bundle 132 is a collection of optical fibers 132a corresponding one-to-one to the pixels of the display panel 106. Although the optical fiber bundle 132 is shown floated from the surface of the display panel 106 in the drawing in order to describe it, one end of each optical fiber 132a is bonded to the surface of the display panel 106 by a light guide adhesive. An outer circumferential surface of the collection of the optical fibers 132a is covered with a coating 132b to be bundled. In this manner, the translucent cover 131, the optical fiber bundle 132, and the display panel 106 are connected to each other and integrated.

A luminous flux of the right eye image 161a displayed on the display panel 106 enters from one ends of the optical fibers 132a and is emitted from the other ends of the optical fibers 132a. The collection of the other end of the optical fibers 132a, which is an emission surface, forms a virtual screen along the inner curved surface of the translucent cover 131. Thus, the right eye image 161a displayed on the display panel 106 is observed by the user on this virtual screen.

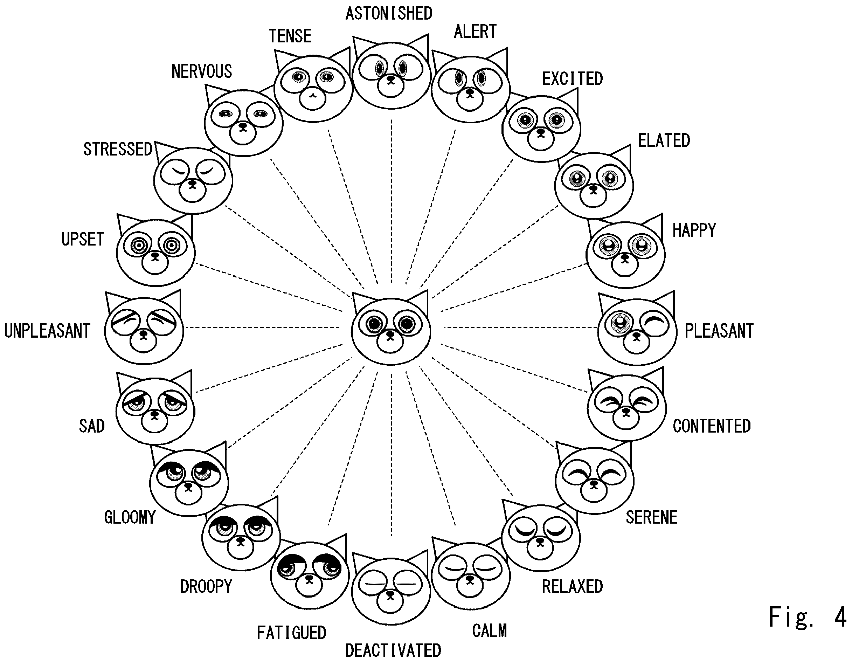

Fig. 4 is a view showing a relationship between the expressions expressed by the robot 100 and the Russell's circumplex model. Although the states of the face part 120 are shown side by side in the drawing, the robot 100 according to this embodiment controls impressions that the user receives from the entire face part 120 by the right eye moving image and the left eye moving image reproduced and displayed on the display panels 106. Therefore, the moving image data stored in association with the emotions described below in the response expression DB 320 is a set of moving image data pieces corresponding to the right eye moving image data and the left eye moving image data.

The Russell's circumplex model proposed in the field of psychology is a model in which all emotions are arranged annularly on a plane with axes of "pleasant-unpleasant" and "astonished-deactivated". There are various opinions as to how to arrange the specific emotions. In this embodiment, as shown in the drawing, 20 emotions of, clockwise from "astonished", "alert", "excited", "elated", "happy", "pleasant", "contented", "serene", "relaxed", "calm", "deactivated", "fatigued", "droopy", "gloomy", "sad", "unpleasant", "upset", "stressed", "nervous", and "tense" are arranged so as to be evenly spaced from each other around a circumference. In the illustrated Russell circumplex model, the emotions adjacent to each other are similar emotions. Therefore, the expressions of the emotions adjacent to each other are similar. Symbols of the moving image data associated with the emotions are created in advance with such a relationship.

Next, a structure and display control of the moving image data will be described. As described above, the moving image data is managed with a set of right eye moving image data and left eye moving image data. Hereinafter, the right eye moving image data is described, and the same description about the left eye moving image data is omitted, unless otherwise mentioned.

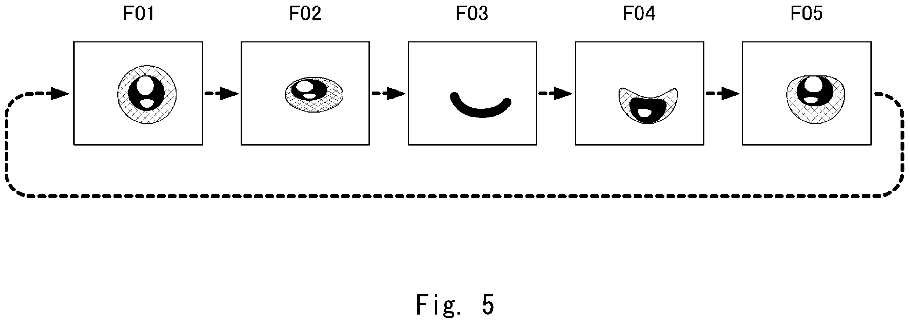

Fig. 5 is a view for describing the reproduction of the right eye moving image data. As shown in the drawing, the right eye moving image data is composed of a plurality of consecutive frame images. The state of the right eye is drawn in each frame. In the example shown in the drawing, the right eye moving image data is composed of five frames from a frame F01 to a frame F05. When these frames are sequentially reproduced in numerical order, a change from the state in which the black eye is opened, to a change to the state in which it is closed, and then back to the state in which it is opened again can be expressed as animation. Further, a certain expression can be repeatedly expressed by returning from the frame F05 to the frame F01 to reproduce these frames. The display control unit 210 reproduces and displays the right eye moving image data on the display panel 106 of the right eye 122a at a speed of, for example, about 6 frames per second.

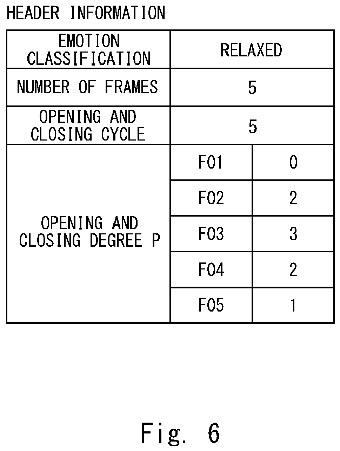

Fig. 6 is a view for describing header information of the right eye moving image data. The header information is additional information added to the right eye moving image data and is described in a header area.

The header information mainly includes "emotion classification", "number of frames", "opening and closing cycle", and "opening and closing degree" as information about the display of expressions. The "emotion classification" is information indicating what emotion the moving image data expresses. One emotion shown by the above Russell's circumplex model is associated with the emotion classification. In the example of the drawing, "relaxed" is described as the "emotion classification". The expression acquisition unit 204 searches for the moving image data of the designated empathic emotion with reference to the information of the "emotion classification".

The "number of frames" indicates how many frame images the moving image data is composed of. In the example shown in the drawing, the moving image data is composed of five frame images. When one emotion is continuously expressed, the display control unit 210 smoothly executes repetitive reproduction with reference to the information of the "number of frames".

The "opening and closing cycle" indicates the number of frames from a frame in which an opened state is drawn, and then a frame in which a closed state is drawn until returning to a frame in which the opened state is drawn. In the example of the drawing, the "opening and closing cycle" is 5, which is the same as the "number of frames", constitute one cycle. The "opening and closing degree" is a value indicating how open the right eye drawn in each frame is. The value of the "opening and closing degree" is determined for each frame. Here, the opening and closing degree is represented in four stages from "P0" to "P3". The most opened state is "P0", the closed state is "P3", and the middle states between them are "P1" (slightly opened), and "P2" (slightly closed). In the drawing, for example, P2 is defined for the frame F04.

In the communication robot according to the related art, in order to change the expression to be expressed, the moving image being reproduced midway through the reproduction is terminated, and then the next moving image is reproduced from the beginning or one cycle of the moving image being reproduced is completed, and then reproduction of the next moving image is started. When the moving image being reproduced midway through the reproduction is terminated, and then the next moving image is reproduced from the beginning, the continuity of expressions is lost, causing an unnatural and non-continuous change in the expressions which is impossible in living human beings and animals. When one cycle of the moving image being reproduced is completed, and then reproduction of the next moving image is started, a delay in a turning point in the emotions is generated in a conversation with a user, which become a factor in hindering smooth communication.

Therefore, in the robot 100 according to this embodiment, the emotion to be expressed is switched at an appropriate timing, and in order to reduce an unnatural impression given to the user in consideration of the continuity of the expressions, an improvement is made in the switching of reproduction from the first moving image data to the second moving image data. Several display control ways at the time of switching the reproduction will be described below.

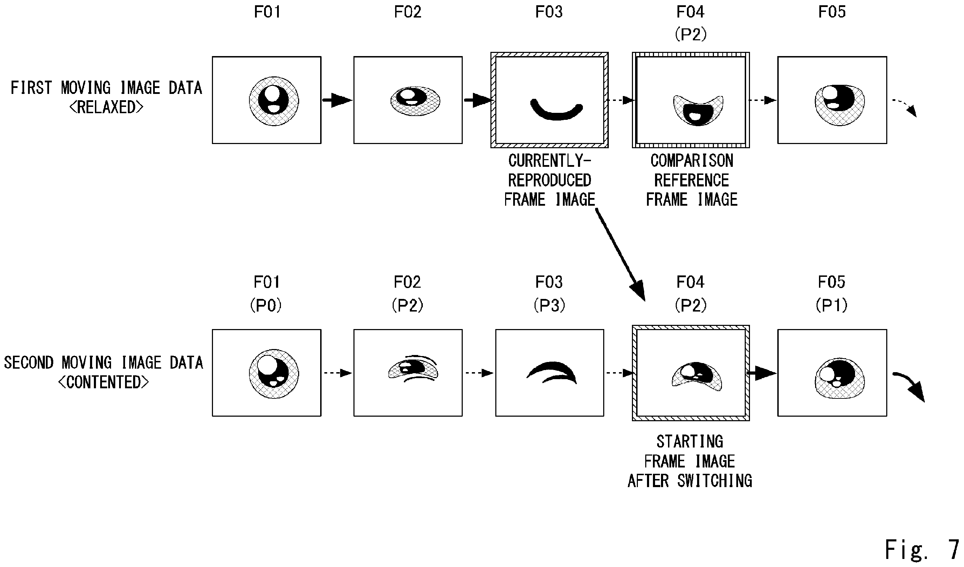

Fig. 7 is a view for describing a first control example in which the reproduction and display are switched from the first moving image data currently being displayed to the second moving image data to be displayed next. The first moving image data that is being reproduced and displayed at the present time is moving image data expressing "relaxed". The expressed expression determination unit 203 determines to reproduce the moving image data expressing "contented" at a certain timing when this moving image data is being reproduced and displayed.

When the display control unit 210 receives the "contented" moving image data, it decides the timing for switching the display. In the example shown in the drawing, a timing to switch the display is at the timing when display of the frame F03 of the first moving image data is ended. That is, the frame F03 of the first moving image data is a frame image of the first moving image data to be reproduced and displayed immediately before the switching. It is preferable that the timing for switching the display be as close as possible to the timing at which the empathic emotion is switched, which is determined by the expressed expression determination unit 203. In reality, the timing for switching the display is decided in consideration of the time taken for the expression acquisition unit 204 to read the moving image data from the response expression DB 320, the time required for the display control unit 210 to perform calculation processing, and the like.

The display control unit 210 uses the frame F03 of the first moving image data as a currently-reproduced frame image and defines the frame F04, which is the next frame image of the frame F03, as a comparison reference frame image. Then, the display control unit 210 searches the header information for the opening and closing degree P of the frame F04, which is the comparison reference frame image. When the display control unit 210 finds that the opening and closing degree of the frame F04 is P2, it extracts the frame image having the opening and closing degree of P2 from the frame images constituting the second moving image data. In the example shown in the drawing, the frames F02 and F04 of the second moving image data are defined as having the opening and closing degree of P2.

When the opening and closing degree of the comparison reference frame image is the same as that of a starting frame image after the switching displayed first after the switching, it can be said that the drawing of the eye of the comparison reference frame image is relatively similar to the drawing of the eye of the starting frame image after the switching. Therefore, when the reproduction and display of the first moving image data are completed with the currently-reproduced frame image, and then reproduction and display of the second moving image data are started from such a starting frame image after the switching, it is possible to smoothly connect the reproduction and display of both of the image data pieces without giving an unnatural impression to the user. Further, since there is no waiting until the last frame of the first moving image data is reproduced, an unnatural feeling, i.e., a delay at the time of switching the emotion, is greatly reduced.

The starting frame image after the switching may be either the frame F02 or the frame F03 having the opening and closing degree of P2. However, in this embodiment, the starting frame image after the switching is decided using the opening and closing cycle information as well. That is, as the comparison reference frame image is the frame F04, and the opening and closing cycle of the first moving image data is 5, it can be understood that the change of the right eye image at the present time transitions from the closed state to the open state. Thus, the starting frame image after the switching corresponding to this change is selected. The display control unit 210 reads the opening and closing cycle of the second moving image data, and uses the frame image of the latter half of the cycle corresponding to F04 of the comparison reference frame image as a candidate of the starting frame image after the switching.

In the manner described above, the display control unit 210 decides that the frame F04 of the second moving image data is the starting frame image after the switching with reference to the opening and closing cycle. That is, when the display control unit 210 displays up to the frame F03 of the first moving image data, it switches the display to the frame F04 of the second moving image data, and starts reproducing and displaying the second moving image data from this frame. By connecting the reproduction and display of both the first and second image data in this manner, the change before and after the switching can continue, so that it is possible to give the user a smoother impression as regards switching of emotions to be expressed.

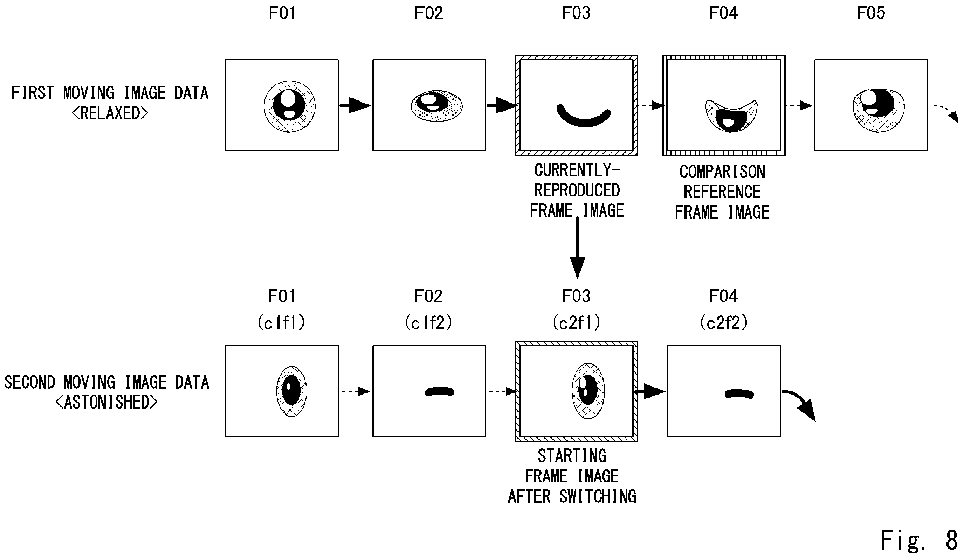

Fig. 8 is a view for describing a second control example in which the reproduction and display are switched from the first moving image data currently being displayed to the second moving image data to be displayed next. The first moving image data that is being reproduced and displayed at the present time is moving image data expressing "relaxed". The expressed expression determination unit 203 determines to reproduce the moving image data expressing "astonished" at a certain timing when the moving image data expressing "relaxed" is being reproduced and displayed.

The second moving image data, which is moving image data expressing "astonished", has the number of frames of 4 and the opening and closing cycle of 2. A frame F01 is a first frame (c1f1) in a first cycle, a frame F02 is a second frame (clf2) in the first cycle, a frame F03 is a first frame (c2f1) in a second cycle, and a frame F04 is a second frame (clf2) in the second cycle. The right eye drawn in each of the first frames is in the opened state or a state close thereto, and the right eye drawn in each of the second frames is in the closed state or a state close thereto.

Like in the first control example, the frame F03 of the first moving image data is used as the currently-reproduced frame image, and the frame F04 is used as the comparison reference frame image. As the opening and closing cycle of the first moving image data is 5, the frame F04, which is the comparison reference frame image, is the frame image of the latter half of the cycle. Thus, the display control unit 210 determines that the first frame of each cycle in the second moving image data is similar to the comparison reference frame image and follows the flow of change. Since the comparison reference frame image is the frame image of the latter half of the cycle of the first moving image data, the first frame (c2f1) is selected from the second cycle, which is the latter half of the opening and closing cycle of the second moving image data, and is decided as the starting frame image after the switching.

That is, when the display control unit 210 displays up to the frame F03 of the first moving image data, it switches the display to the frame F03 of the second moving image data, and starts reproducing and displaying the second moving image data from this frame. In this manner, the starting frame image after the switching can be decided from the cycle information without using the information of the opening and closing degree depending on the moving image data of interest. As described so far, even when the starting frame image after the switching is decided, it is possible to smoothly connect the reproduction and display of both the first and second image data without giving an unnatural impression to the user.

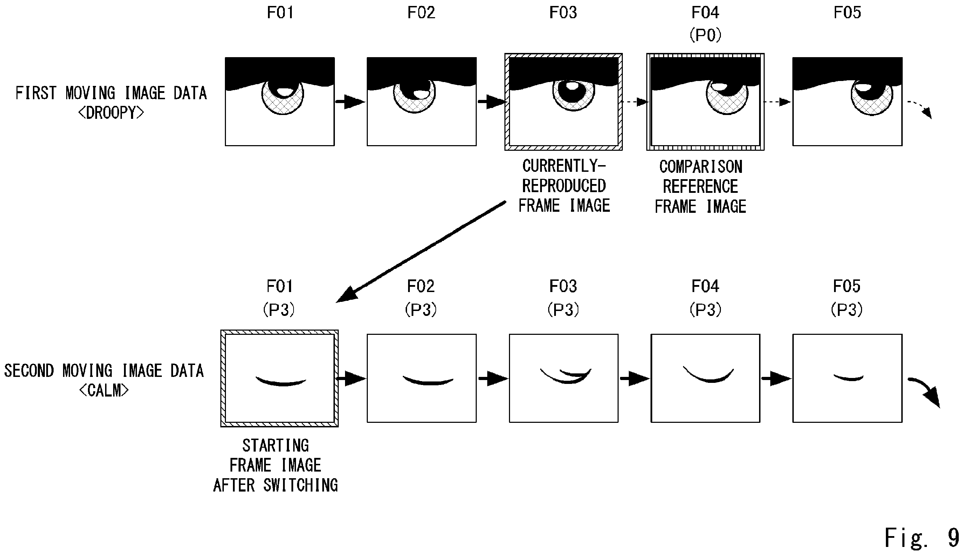

Fig. 9 is a view for describing a third control example in which the reproduction and display are switched from the first moving image data currently being displayed to the second moving image data to be displayed next. The first moving image data that is being reproduced and displayed at the present time is moving image data expressing "droopy". The expressed expression determination unit 203 determines to reproduce the moving image data expressing "calm" at a certain timing when this moving image data is being reproduced and displayed.

The first moving image data which is moving image data expressing "droopy" is composed of five frame images. The right eyes in these frame images are drawn in the opened state (P0). The second moving image data which is moving image data expressing "calm" is also composed of five frame images. The right eyes in these frame images are drawn in the closed state (P3). For example, even when the display control unit 210 uses a frame F03 of the first moving image data as the currently-reproduced frame image, and decides that a frame F04 is the comparison reference frame image, the frame image having the same opening and closing degree as that of the frame F04, which is P0, cannot be extracted from the second moving image data.

In such a case, the display control unit 210 decides that the frame F01 of the second moving image data is the starting frame image after the switching. In this way, when the state of the right eye drawn in each of the frames constituting the first moving image data and the state of the right eye drawn in each of the frames constituting the second moving image data greatly differ from each other, it is preferable that the frame images be discontinuous at the time of switching the moving image data, because it gives an impact to the user.

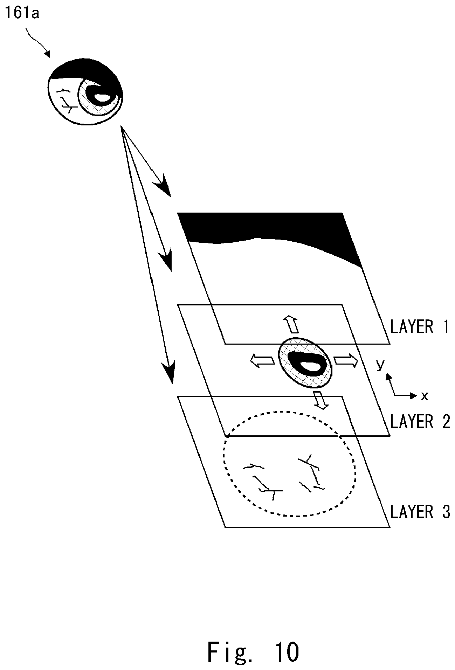

Next, the frame image of moving image data employed in this embodiment will be described. Fig. 10 is a view for describing a layer structure of the frame image. For example, suppose that a certain frame image of the moving image data expressing "fatigued" is reproduced and displayed as shown at the upper left of the drawing. The right eye image 161a is composed of three elements, an element expressing an eyelid, an element expressing a black eye, and an element expressing a white eye including capillaries. In the frame image, these elements are held separately in each layer.

That is, as shown in the drawing, the drawing of the eyelid is held in a layer 1, the drawing of the black eye is held in a layer 2, and the drawing of the white eye including the capillaries is held in a layer 3. In other words, each frame image has a three-layer structure. The display control unit 210 displays the layers 1 and 3 among these layers at predetermined positions of the display panel 106. On the other hand, a display position of the black eye expressed by the layer 2 (a black eye layer) on the display panel 106 is adjusted to achieve the line-of-sight direction received from the line-of-sight decision unit 205. That is, a reference position of the black eye is moved to coordinates that achieve the received line-of-sight direction.

In this manner, when the line-of-sight direction is adjusted by moving only the element of the black eye while the elements other than the element of the black eye are fixed, it is possible to give a more natural impression as a change in the line-of-sight direction. Further, in this way, the elements other than the element of the black eye will not move, so that an unnatural impression as a whole face will not be given.

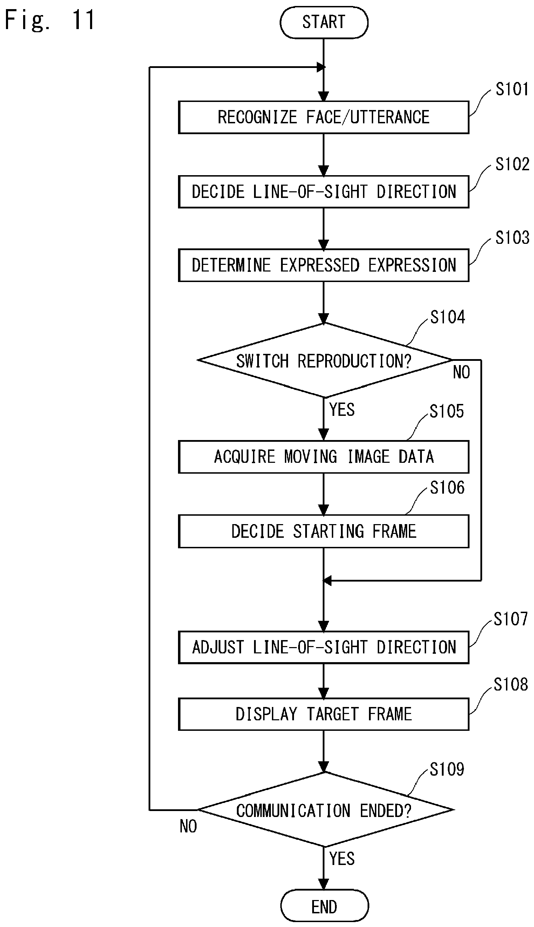

Next, a procedure of operation processing executed by the control unit 200 regarding the adjustment of the expression will be described. The operation processing described below is executed by the control unit 200 executing a control program read from the system memory. Fig. 11 is a flowchart showing the procedure of the operation processing. The flow starts when the robot 100 is powered on. Note that descriptions of processing other than processing related to the adjustment of the expression are omitted.

In Step S101, the face recognition unit 202 acquires the image signal from the camera 102 and recognizes the face area of the user who the robot 100 communicates with. Further, the utterance recognition unit 201 acquires the voice signal from the microphone 101 and recognizes the utterances of the user. In Step S102, the line-of-sight decision unit 205 determines the line-of-sight direction of the eyeball part 122 using these pieces of information.

In Step S103, the expressed expression determination unit 203 determines the expression to be expressed on the face part 120, using the information from the face recognition unit 202 and the information from the utterance recognition unit 201. Then, in Step S104, the expressed expression determination unit 203 determines whether the expression to be expressed has changed from the expression that has been expressed. When the expression to be expressed has changed, the process proceeds to Step S105 to switch the reproduction and display of the display panels 106. Otherwise, there is no need to switch the reproduction and display, so the process proceeds to Step S107.

In Step S105, the expression acquisition unit 204 acquires, from the response expression DB 320, the moving image data corresponding to the empathic emotion determined by the expressed expression determination unit 203 to switch the expression to, and passes the moving image data over to the display control unit 210. In Step S106, as described with reference to Figs. 7 to 9, the display control unit 210 decides the starting frame image after the switching from the frame images of the moving image data (the second moving image data) received from the expression acquisition unit 204.

In Step S107, as described with reference to Fig. 10, the expression acquisition unit 204 adjusts the line-of-sight direction by moving the reference position of the black eye in the target frame image. When the moving image data is switched (when the process proceeds from Step S106 to Step S107), the target frame image is the starting frame image after the switching, while when the moving image data is not switched (when the process proceeds from Step S104 to Step S107), the target frame image is the next frame image to be continuously reproduced and displayed. In Step S108, the display control unit 210 displays the frame image thus adjusted on the display panels 106.

In Step S109, the control unit 200 determines whether the communication with the user has ended, for example, when a certain period of time in a non-conversational state has elapsed. When the control unit 200 determines that the communication with the user has not ended yet, the process returns to Step S101. When the control unit 200 determines that the communication with the user has ended, a series of processing is ended.

The robot 100 according to the first embodiment has been described above. However, there are variations in the operation processing to be executed regarding the adjustment of the expression. In the above example, an example in which the starting frame image after the switching is decided for the moving image data reproduced and displayed as the right eye has been described. Processing similar to that performed for the right eye may be separately performed on the moving image data reproduced and displayed as the left eye, or the switching processing may be performed in synchronization with the timing to switch the right eye. It is obvious that the timing to switch the right eye may be synchronized with the timing to switch the left eye based on the moving image data reproduced and displayed as the left eye. Moreover, it is also possible to decide whether the moving image data of the right eye is subject to the determination or the moving image data of the left eye is subject to the determination according to a content of the drawing of the moving image data being reproduced.

In the above embodiments, similarity between the comparison reference frame image and the starting frame image after the switching is determined using the opening and closing degree of the black eye for each frame and the cycle information described in the header. Such determination enables the similarity to be more easily determined, so that the switching timing of the reproduction and display can be successfully brought close to the timing of the emotional change. However, with high computing power of the display control unit or the like, or when such information is not prepared in the header information in advance, the display control unit may determine the degree of similarity by an image analysis of the drawing of the comparison reference frame image and the drawing of each frame image of the second moving image data.

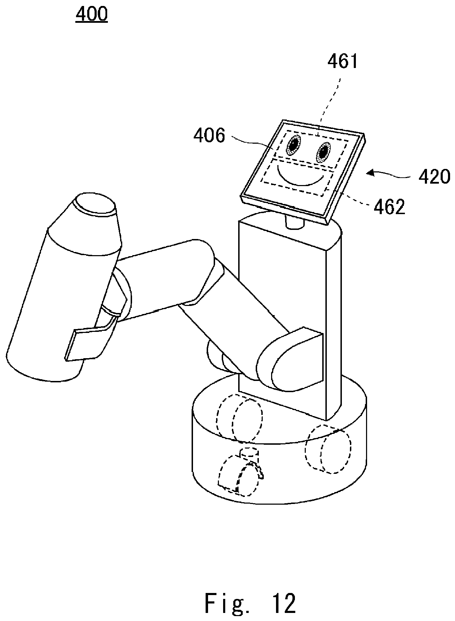

Next, a second embodiment of the present disclosure will be described. Fig. 12 is a schematic view of a robot 400 according to the second embodiment. The robot 100 according to the first embodiment is a communication robot that embodies a character. The robot 400 according to the second embodiment is also a communication robot further including a function as a transport robot that holds a transporting object and autonomously moves. There are increasing number of transport robots recently that share work spaces with humans, and ones that perform work while communicating with humans are also known. The robot 400 is a transport robot that is capable of executing communication like the robot 100.

A configuration related to the communication function of the robot 400 is almost the same as that of the robot 100, and thus the differences between the robots 100 and 400 will be mainly described. In a functional robot like a transport robot, a face part and a body part do not necessarily mimic the form of a human being or an animal. As shown in the drawing, a face part 420 of the robot 400 is composed almost only of a display panel 406. A face image including an eye image 461 and a mouth image 462 are displayed on the display panel 406.

Like the robot 100, the robot 400 configured in this way shows an empathic emotion by changes in the images. Specifically, moving image data corresponding to each emotion is prepared as the eye image 461, and as the mouth image 462 to correspond to the moving image data of the eye image 461. In order to change the expression, the frame image to be switched in each of the moving image data is decided in the manner described above. Then, it is possible to smoothly change the expression without giving an unnatural impression to the user. Thus, even when the robot 400 has an appearance far different from the form of a human or an animal, the user working with the robot 400 can communicate like he/she is communicating with the robot 100.

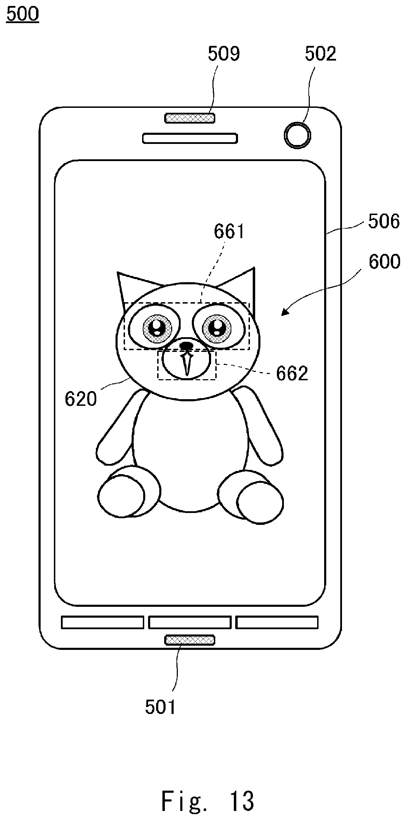

Next, a third embodiment of the present disclosure will be described. Fig. 13 is a schematic view of a tablet terminal 500 according to the third embodiment. In the first and second embodiments, the robot is the partner with which the user has a dialog. However, in the third embodiment, the partner with which the user has a dialog is a video character 600 displayed on a tablet terminal 500. When the character is substantiated as a robot, the user can feel the robot like a pet and can be more attached to it. The tablet terminal 500 can easily express a character.

A configuration related to the communication function of the tablet terminal 500 is almost the same as that of the robot 100, and thus the differences between the robot 100 and the tablet terminal 500 will be mainly described. The tablet terminal 500 includes a microphone 501, a camera 502, a display panel 506, and a speaker 509. The display panel 506 is, for example, a liquid crystal panel and displays the video character 600.

A face part 620 of the video character 600 expresses empathic emotions by changing an eye image 661 and a mouth image 662. Specifically, moving image data corresponding to each emotion is prepared as the eye image 661, and corresponding to the moving image data of the eye image 661, moving image data corresponding to each emotion is also prepared as mouth image 662. In order to change the expression, the frame image to be switched in each of the moving image data is decided in the manner described above. Then, it is possible to smoothly change the expression without giving an unnatural impression to the user. Thus, even when the video character 600 is displayed on the tablet terminal 500, the video character 600 can communicate like the robot 100.

Although the present disclosure been described through the first to third embodiments, aspects of the communication apparatus are not limited to these embodiments. For example, the environment sensor and the database may be provided in an external apparatus. In this case, the communication apparatus may include a communication IF for communicating with such an external apparatus.

In the above embodiments, the face part including left and right eyes has been described. However, the character may include a monocular eyeball part or three or more eyeball parts. Further, in the above example, the eyeball part 122 with the optical fiber bundle 132 included therein has been described, but a curved display panel may be employed as the eyeball part 122 without including the optical fiber bundle 132 or the like. Alternatively, to be simple, a flat display panel may be employed as the eye ball part 122.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A communication apparatus (100) comprising:
a display unit (106);
an acquisition unit (204) configured to acquire, from a database, moving image data composed of a plurality of frame images for expressing an emotion;
a display control unit (210) configured to reproduce and display the moving image data acquired by the acquisition unit on the display unit; and
a determination unit (203) configured to determine switching of the moving image data reproduced and displayed on the display unit from first moving image data, which is currently being reproduced and displayed, to second moving image data, which is to be reproduced and displayed next, wherein
when the determination unit determines to switch the moving image data to be reproduced and displayed on the display unit from the first moving image data to the second moving image data, the display control unit selects a frame image to start reproducing from the second moving image data in order to reproduce and display the second moving image data in such a way that a next frame image of a frame image of the first moving image data reproduced and displayed immediately before the switching becomes similar to the frame image of the second moving image data to be reproduced and displayed immediately after the switching.

2. The communication apparatus according to Claim 1, wherein
the display unit is provided to display the moving image data expressing a change in an eyeball part, and
the display control unit selects the frame image to start reproducing from the second moving image data in order to reproduce and display the second moving image data in such a way that an opening and closing degree of a black eye of the eyeball part of the next frame image of the frame image of the first moving image data reproduced and displayed immediately before the switching becomes similar to that of the frame image of the second moving image data to be reproduced and displayed immediately after the switching.

3. The communication apparatus according to Claim 2, wherein
the moving image data includes information about the opening and closing degree of each frame image as additional information, and
the display control unit selects the frame image to start reproducing from the second moving image data with reference to the additional information.

4. The communication apparatus according to Claim 2 or 3, wherein
the moving image data includes cycle information about a cycle from an open state of the black eye, then to a closed state of the black eye, and then again to the open state of the black eye as the additional information, and
the display control unit selects the frame image to start reproducing from the second moving image data with reference to the additional information.

5. The communication apparatus according to any one of Claims 2 to 4, wherein
in the moving image data, each frame image includes a plurality of layers, and the plurality of layers include a black eye layer expressing the black eye, and
the display control unit adjusts a display position of the black eye layer on the display unit according to a line-of-sight direction to be expressed and fixes the positions where the layers other than the black eye layer are displayed.

6. A control program of a communication apparatus (100) for reproducing and displaying moving image data composed of a plurality of frame images for expressing an emotion on a display unit (106), the control program causing a computer to execute:
reproducing and displaying first moving image data of the moving image data on the display unit;
determining switching of the moving image data to be reproduced and displayed on the display unit from the first moving image data to second moving image data; and
selecting a frame image to start reproducing from the second moving image data in order to reproduce and display the second moving image data when the determining determines that the moving image data is switched to the second moving image data, in such a way that a next frame image of a frame image of the first moving image data reproduced and displayed immediately before the switching becomes similar to the frame image of the second moving image data to be reproduced and displayed immediately after the switching.
